# EUROPEAN PATENT APPLICATION

(11) **EP 2 589 944 A1**
(43) Date of publication of application: **08.05.2013**
(21) Application number: 11800634.5
(22) Date of filing: 17.06.2011
(51) Int. Cl.: G01L 5/22, B62M 6/40, G01L 3/14

(54) **PEDAL FORCE SENSOR AND ELECTRICALLY-ASSISTED VEHICLE USING SAME**

(30) Priority: 02.07.2010 JP 2010152546
(71) Applicant: Taiyo Yuden Co., Ltd., Tokyo 110-0005 (JP)
(72) Inventor: HOSAKA, Yasuo, Tokyo 110-0005 (JP); SAKURAI, Tatsuya, Tokyo 110-0005 (JP); BABA, Michiru, Iwata-shi Shizuoka 438-0002 (JP)
(74) Representative: Müller-Boré & Partner Patentanwälte
(86) International application number: PCT/JP2011/063871
(87) International publication number: WO 2012/002169

(57) **Abstract**

Provided is a pedal force sensor which, in pedal force detection utilizing an elastic body, can detect pedal force over a wide range and reduce detection errors originating from variation in the attachment position or length etc. of the elastic body. Linkage between a drive wheel (30) that is fixed to a crankshaft (14) and a sprocket (50) that transmits rotary force of the crankshaft (14) to a propelling vehicle wheel is effected by a plurality of springs (80 to 90), and furthermore the space between each spring (80 to 90) and compression means thereof is set in such a way that the compression commencement timings of the plurality of springs (80 to 90) are offset. When detecting pedal force from the phase difference of the drive wheel (30) and the sprocket (50), the number of springs that are utilized changes in accordance with the range of the phase difference. In other words, since the spring constant that is utilised differs in accordance with the range of the phase difference, the pedal force can be detected on the basis of this changing spring constant. As a result, the relationship between the amount of displacement and the pedal force is made to be nonlinear, and a pedal force sensor is thereby obtained that approximates the desired detection characteristics.

## Description

### Technical Field

The present invention relates to a pedal force sensor utilized on electrically-assisted bicycles, etc., as well as an electrically-assisted vehicle using such sensor, and more specifically to nonlinearity of pedal force detection characteristics.

### Background Art

On electrically-assisted bicycles, etc., the pedal force reflecting the degree of stepping on the pedal by the user is detected to control the amount of motor assist. A torque detection device for detecting this pedal force must be able to detect a wide range of forces from approx. 5 kg to 100 kg. Such torque detection means include, for example, the technology utilizing a spring mechanism described in Patent Literature 1 mentioned below. Patent Literature 1 discloses a torque detection device characterized in that the output side that transmits rotation to the wheel is biased via an elastic member towards the reverse rotating direction relative to the rotating body on the input side which is rotated by human force, so that torque is detected based on the phase difference of the two rotating bodies, wherein the elastic member utilizes an expandable/contractible coil spring.

### Background Art Literature

### Patent Literature

Patent Literature 1: Japanese Patent Laid-open No. 2001-249058

### Summary of the Invention

### Problems to Be Solved by the Invention

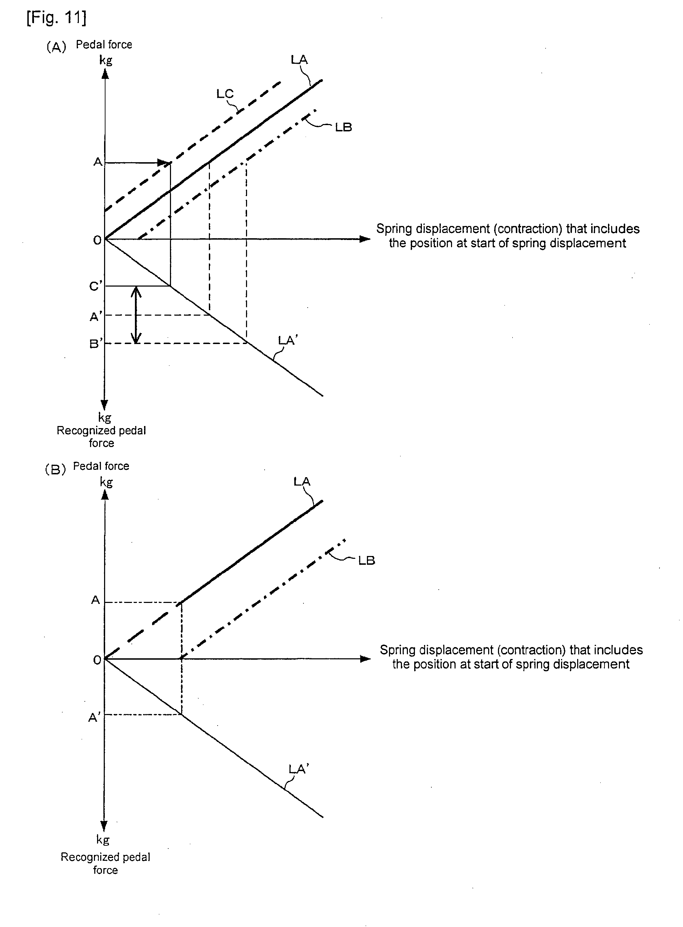

However, detecting torque using the aforementioned spring mechanism presents the following two problems for the reason of variation in the spring installation position and length, among others, and these points must be considered. The first problem is that, even when the force applied at the start of stepping is the same, the recognized pedal force still varies between products. Fig. 11 (A) shows the relationships of pedal displacement (contraction) including the position at start of spring displacement expressed along the horizontal axis on one hand, and pedal force and recognized pedal force expressed along the vertical axis above and below, respectively, on the other. In the figure, LA through LC represent springs of the same spring constant and length installed at different positions, where the thick solid line LA assumes that the spring installation position corresponds to the reference position, one-dot chain line LB assumes that the spring installation position is offset to the right along the horizontal axis relative to the reference position, and dotted line LC assumes that the spring installation position is offset to the left along the horizontal axis relative to the reference position. As for the one-dot chain line LB, the position at the start of compression of the spring is offset from that of the solid line LA. This means that because of this offset, the spring does not displace until a certain level of force is applied. Here, if the recognized pedal force is set as shown by the thin solid line LA' based on the assumption that the spring installation position corresponds to the reference position, the recognized pedal force is equal to A' when the pedal force is A kg and the spring installation position corresponds to the reference position. If the spring installation position is offset to the right along the horizontal axis, however, the recognized pedal force is equal to B' which is greater than A'. If the spring installation position is offset to the left along the horizontal axis, on the other hand, the recognized pedal force is equal to C' which is smaller than A'. In other words, the recognized pedal force varies when the spring installation position is offset either to the left or right along the horizontal axis from the reference position. Variation in the recognized pedal force creates a problem of variation among products in the feeling of assist on the part of the user.

The second problem relates to the setting at the start of assist. As shown by the one-dot chain line LB in Fig. 11 (B), an offset spring installation position from the reference position means that the position at the start of compression of the spring is offset from the case represented by the solid line LA, and consequently assist is provided until the recognized pedal force becomes A' kg even when no pedal force is applied in reality. If the spring installation position is offset, therefore, a setting that disables assist, or ignores weak pedal force, must be used when the pedal force is A kg or less. When assist is set with reference to the case represented by the one-dot chain line LB, on the other hand, the spring displacement will be falsely detected as 0 (area indicated by the broken line in the figure) even when a pedal force of A kg is applied, if the spring installation position corresponds to the reference position (solid line LA). These problems may occur not only when the spring installation position varies, but also when the spring length is different. To solve these problems, the pedal force detection error arising from variation in the spring installation position and length, etc., must be reduced.

The present invention focuses on the points described above. Accordingly, it is one object of the present invention to provide a pedal force sensor capable of: detecting the pedal force by utilizing a spring or other elastic body by reducing the pedal force detection error arising from initial actuation and acceleration including variation in the installation position and length of the elastic body, modulus of elasticity and other characteristics; providing sufficient assist as required when a pedal force is actually applied at the time of initial actuation or acceleration; and offering characteristics that make it possible to detect a wide range of pedal forces in an accurate manner even when the pedal force is small.
It is another object of the present invention to provide an electrically-assisted vehicle on which the aforementioned pedal force sensor is installed.

### Means for Solving the Problems

A pedal force sensor according to the present invention comprises:
a drive wheel of roughly plate-like shape that is fixed at right angles to a crankshaft and rotates together with the crankshaft; a sprocket of roughly plate-like shape that is positioned opposed to the drive wheel and transmits the rotational force given to the crankshaft to a propelling wheel; multiple pressing means provided on the drive wheel side; multiple pressure-receiving means provided on the sprocket side in a manner facing the pressing means; multiple elastic bodies that each indirectly couple the drive wheel and sprocket between the pair of pressing means and pressure-receiving means and also expand/contract in the circumferential direction according to the amount of rotational displacement between the drive wheel and sprocket; and a sensor that detects the relative rotational phase difference between the drive wheel and sprocket; wherein the multiple pairs of pressing means and pressure-receiving means are positioned in such a way that expansion/contraction of the multiple elastic bodies between the pressing means and pressure-receiving means starts at multiple timings.

One main embodiment is a pedal force sensor characterized in that: the multiple pressing means are provided on one side of the opening edges of multiple first openings formed apart along a desired circumferential path of the drive wheel; the multiple pressure-receiving means are provided on the other side of the opening edges of multiple second openings formed in the sprocket at positions facing the multiple first openings; and the elastic bodies are commonly stored in both the first openings and corresponding second openings so as to indirectly couple the sprocket to the drive wheel.

Another pedal force sensor according to the present invention comprises: a drive wheel of roughly plate-like shape that is fixed at right angles to a crankshaft and rotates together with the crankshaft; a sprocket of roughly plate-like shape that is positioned opposed to the drive wheel and transmits the rotational force given to the crankshaft to a propelling wheel; multiple first openings formed apart along a desired circumferential path of the drive wheel; multiple second openings formed in the sprocket at positions corresponding to the multiple first openings; multiple elastic bodies that are commonly stored in both the first openings and corresponding second openings and indirectly couple the sprocket to the drive wheel, while being expandable/contractible in the circumferential direction according to the amount of rotation of the drive wheel; multiple elastic body compression means that apply compressive force to the multiple elastic bodies in the circumferential direction according to the amount of rotation of the drive wheel; multiple first detection target parts provided on the drive wheel roughly at an equal pitch along a circumferential path different from that of the first openings; multiple second detection target parts provided by the same number as the first detection target parts on the sprocket roughly at an equal pitch along a circumferential path different from that of the second openings and first detection target parts; a first non-contact sensor provided at a position where the first detection target parts can be detected, away from the first detection target parts, and in a manner not interlocked with the crankshaft; and a second non-contact sensor provided at a position where the second detection target parts can be detected, away from the second detection target parts, and in a manner not interlocked with the crankshaft; wherein the elastic bodies and elastic body compression means are positioned in such a way that compression of the multiple elastic bodies by the elastic body compression means starts at multiple timings.

One main embodiment is a pedal force sensor characterized in that the elastic body compression means comprises: a pressing means that utilizes at least one of one edge of the first opening in the drive wheel and a contact body that rotates together with the drive wheel and contacts the elastic body; and a pressure-receiving means that utilizes the other edge of the second opening in the sprocket. Another embodiment is a pedal force sensor characterized in that the multiple elastic bodies are supported in an expandable/contractible manner in the circumferential direction of the drive wheel by projections provided at at least one of the first openings in the drive wheel and second openings in the sprocket.

Yet another embodiment is a pedal force sensor characterized in that the elastic bodies are coil springs. Yet another embodiment is a pedal force sensor characterized in that a rotation-limiting means is provided that regulates the rotational displacement between the drive wheel and sprocket within a specified range. Yet another embodiment is a pedal force sensor characterized in that the multiple elastic bodies include two or more types of elastic bodies in which at least one of length and modulus of elasticity is different.

An electrically-assisted vehicle according to the present invention has one of the aforementioned pedal force sensors installed on it.
The aforementioned and other purposes, characteristics and benefits of the present invention are made clear through the detailed explanations below and attached drawings.

### Effects of the Invention

According to the present invention, multiple elastic bodies are used to indirectly couple a drive wheel fixed to a crankshaft, and a sprocket that transmits the rotational force of the crankshaft to a propelling wheel, to detect the pedal force based on the amount of rotational displacement between the drive wheel and sprocket, in such a way that the distances between elastic bodies and elastic body compression means are set so that the compression start timings of the multiple elastic bodies are staggered. In addition to this positioning, multiple elastic bodies of different lengths and moduli of elasticity are utilized as necessary to achieve a nonlinear relationship between the amount of displacement of the elastic body on one hand and the pedal force on the other, so as to provide a pedal force sensor approximating desired detection characteristics.

### Brief Description of the Drawings

[Fig. 1] This is an explanation drawing showing how the amount of error in the detected pedal force due to a different spring installation position changes at different spring constants.
[Fig. 2] This is an explanation drawing showing the principle of how multiple springs of different spring constants are utilized to make the relationship of displacement and pedal force nonlinear.
[Fig. 3] This is an explanation drawing showing that the number of springs used for pedal force detection is changed by staggering the timings at which to start compression of multiple springs.
[Fig. 4] This is an explanation drawing showing a different example where the number of springs used for pedal force detection is changed by staggering the timings at which to start compression of multiple springs.
[Fig. 5] This is a section view showing main parts of an electrically-assisted bicycle on which the pedal sensor in Example 1 conforming to the present invention is installed.
[Fig. 6] (A) is a plan view of Fig. 5 seen from the direction of the arrow FA, (B) is a plan view of Fig. 5 seen from the direction of the arrow FB, and (C) is a plan view of the spring stored in the first opening seen from the sprocket side.
[Fig. 7] (A) is a plan view of the drive wheel (crank internal plate) seen from the direction of the arrow FA in Fig. 5, (B) is a plan view of the crank internal gear seen from the direction of the arrow FA in Fig. 5, and (C) is a plan view of the sprocket (crank external gear) seen from the direction of the arrow FA in Fig. 5.
[Fig. 8] This is a perspective view showing the internal structure of the pedal force sensor in Example 1.
[Fig. 9] This is a drawing explaining the operation of Example 1.
[Fig. 10] This is a drawing showing an example of the detection circuit in Example 1.
[Fig. 11] This is an explanation drawing showing a prior art.

### Modes for Carrying Out the Invention

Modes for carrying out the invention are explained below in detail based on an example.

### Example 1

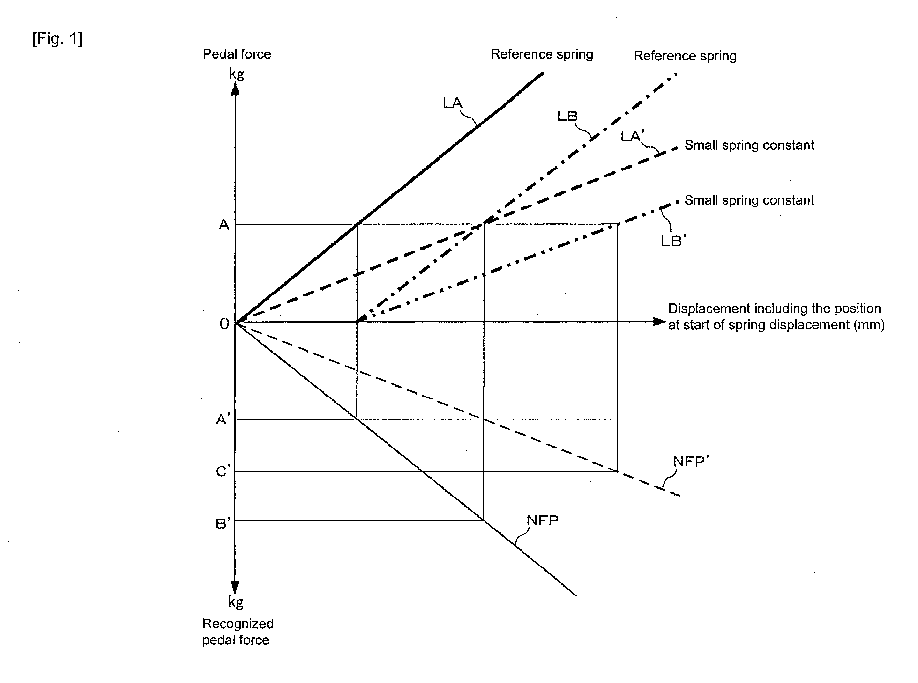

First, the basic concept of the pedal force sensor proposed by the present invention is explained by referring to Figs. 1 to 3. If a spring is used as the elastic body for detecting pedal force torque on an electrically-assisted bicycle, etc., a problem occurs due to variation in the spring installation position and length or variation in the spring constant which is inversely proportional to the spring length, as shown in Figs. 11 (A) and 11 (B) mentioned above. The present invention reduces the error in the detected pedal force arising from such variation in the length, installation position and characteristics (such as modulus of elasticity) of the elastic body, while allowing for detection of a wide range of pedal forces in a range where sufficient assist is required at the time of initial actuation or acceleration. To be specific, multiple elastic bodies for pedal force detection are utilized and the moduli of elasticity of these multiple elastic bodies are changed. In other words, if springs are used, a pedal force sensor is constituted by changing their spring constants and positioning the multiple elastic bodies so that their compression start timings are staggered, or with offsets, so that pedal force detection characteristics become nonlinear and a pedal force sensor approximating a desired detection characteristic curve can be provided. How desired detection characteristics are realized is explained below by using an example where a coil spring is used as the elastic body.

Fig. 1 shows the characteristics according to the relational expression F = kx, where F represents pedal force, k represents spring constant and x represents spring displacement (contraction). Shown in Fig. 1 are the relationships of pedal displacement (contraction) including the position at start of spring displacement expressed along the horizontal axis on one hand, and pedal force and computer-calculated recognized pedal force expressed along the vertical axis above and below, respectively, on the other.
The characteristics represented by the thick solid line LA and one-dot chain line LB in the figure are those of reference springs having the same length and spring constant, where the characteristics represented by the solid line LA assume that the spring installation position corresponds to the reference position, while those represented by the one-dot chain line LB assume that the spring installation position is offset from the reference position, or in other words, the position at start of displacement is offset. The characteristics represented by the thick dotted line LA' assume that a spring whose spring constant is smaller than the reference spring is installed at a position corresponding to the reference position, while those represented by the thick two-dot chain line LB' assume that the same spring as the dotted line LA' (spring whose spring constant is smaller than the reference spring) is used with the position at start of displacement offset to right.

Since the position at start of displacement is different, clearly the solid line LA and one-dot chain line LB give different recognized pedal forces below the horizontal axis in Fig. 1 even when the two springs are displaced by the same amount. In other words, while the recognized pedal force is equal to A' according to the recognized pedal force characteristic line NFP in the case of the solid line LA where the spring installation position corresponds to the reference position, it is equal to B' in the case of the one-dot chain line LB where the spring installation position is offset. Since computer calculation of recognized pedal force is generally set in such a way that the value A' is indicated with reference to the solid line LA where the spring installation position corresponds to the reference position, the one-dot chain line LB where the spring is installed at an offset position shows the value B' which is different from the value A'.

Next, the characteristics obtained when two springs, whose spring constant is smaller than the aforementioned reference spring are used with their position at start of displacement offset, are examined. The characteristics represented by the dotted line LA' assume that the spring of smaller spring constant is installed at the reference position, while those represented by the two-dot chain line LB' assume that the same spring of smaller spring constant is installed at a position offset from the reference position. With these characteristics represented by LA' and LB', the difference in displacement is around twice compared to the aforementioned characteristics represented by LA and LB, when the pedal force is the same. Below the horizontal axis in Fig. 1, on the other hand, the recognized pedal force is different between the dotted line LA' and two-dot chain line LB', even when the two springs are displaced by the same amount, because the positions at the start of displacement are different. In other words, while the recognized pedal force is equal to A' according to the recognized pedal force characteristic line NFP' in the case of the dotted line LA' where the spring installation position corresponds to the reference position, it is equal to C' in the case of the two-dot chain line LB' where the spring installation position is offset. Consequently, the difference between recognized pedal forces A' and C' due to different positions at the start of displacement is around half in the example shown here compared to the aforementioned difference between recognized pedal forces A' and B' when the reference spring is used. Based on the above, use of a spring of smaller spring constant instead of the reference spring reduces the difference in recognized pedal force by the amount of the decrease in spring constant, even when the position is offset. If a spring is used for the pedal force detection mechanism, therefore, the error in the recognized pedal force can be reduced by using a spring of smaller spring constant even when the spring installation position changes (or spring length varies).

However, a small spring constant gives a narrow range of pedal force detection, which in turn prevents detection of strong pedal forces applied at takeoff (initial actuation), during acceleration, on slopes, etc., and the feeling of assist on the bicycle drops. Accordingly, the present invention attempted to reduce the detection error due to length variation and achieve a wide pedal force detection range of 5 kg to 100 kg, for example, by utilizing multiple springs and shifting the compression timing for each spring.

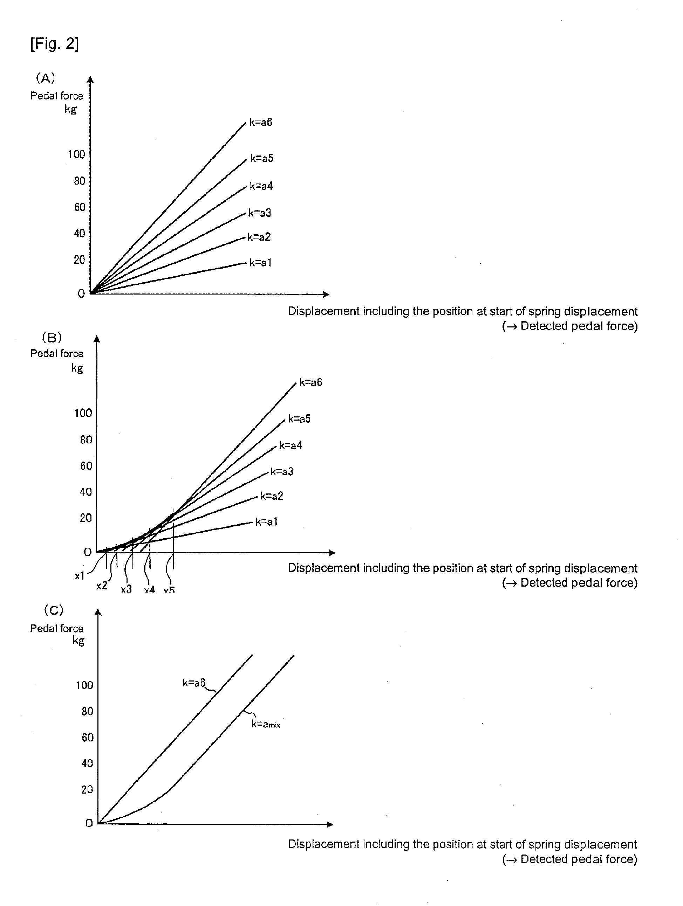

Fig. 2 (A) shows the relationship of displacement including the position at the start of spring displacement expressed along the horizontal axis on one hand, and pedal force expressed along the vertical axis on the other, for each of six springs whose material, linear shape, average coil diameter, etc., are the same and only the spring constant k varies from a1 to a6. The spring constant k is the smallest at a1 and largest at a6. As the spring constant k increases from a1 to a6, the slope of the characteristic line increases. Although the spring displaces when load (pedal force) is applied, a pedal force sensor constituted only by utilizing springs whose spring constant k is a1 results in a large displacement with a small pedal force, and the pedal force detection range becomes narrow. On the other hand, a pedal force sensor constituted by utilizing springs whose spring constant k is a6 is associated with small change due to pedal force, and consequently the pedal force detection range can be widened because large pedal forces can be detected with springs of limited lengths.

Accordingly, what happens when the setting positions or installation positions of six springs of spring constant k = a1 to a6 are slightly shifted, or specifically when the origins of their characteristic lines are shifted slightly, as shown in Fig. 2 (B), is explained. For example, the line of smallest spring constant k = a1 is used for the range from displacement 0 to displacement x1, while the line of second smallest spring constant k = a2 is used for the range from displacement x1 to displacement x2. Similarly, the line of spring constant k = a3 is used for the range from displacement x2 to displacement x3, line of spring constant k = a4 is used for the range from displacement x3 to displacement x4, and line of spring constant k = a5 is used for the range from displacement x4 to displacement x5. Furthermore, the line of largest spring constant k = a6 can be used for the range from displacement x5 or greater. This way, the spring constant changes according to the displacement, in theory. Note that, as for the position of each spring in this combination of springs having different spring constants, the spring of smallest spring constant was placed at the position where displacement would start first, followed by springs of increasingly larger spring constants. However, this order need not be always followed because, if springs are used in parallel, their composite spring constant is the same as the sum of all spring constants and therefore it is the same as using a spring of a larger spring constant corresponding to this sum.

Based on the pedal force detection characteristics here, the pedal force detection range is narrow, or detection error due to variation in the length and installation position is small, when the displacement is small, as shown by the spring constant k = aₘᵢₓ in Fig. 2 (C), and the pedal force detection range increases as the displacement increases. In other words, even when the origin is the same as in the graph of spring constant k = a6 shown in Fig. 2 (C), the characteristics are linear when k = a6, while the approximate characteristic curve rises gradually when k = aₘᵢₓ where multiple springs of different spring constants are used. Although this characteristic curve is only a simple representation of the idea, in reality it represents the characteristic curve of a spring having a composite spring constant.

In other words, making the rise of the characteristic curve gradually results in large spring displacement relative to change in pedal force in the range of 0 to 10 kg, for example, where the pedal force is small, but it is hardly reflected in the change in pedal force. Since spring variation manifests in the detection result when the pedal force is small, impact of this variation on pedal force measurement can be reduced by, for example, ensuring accurate detection of the condition at the start of pedaling on an electrically-assisted bicycle, so that the amount of assist can be controlled properly.

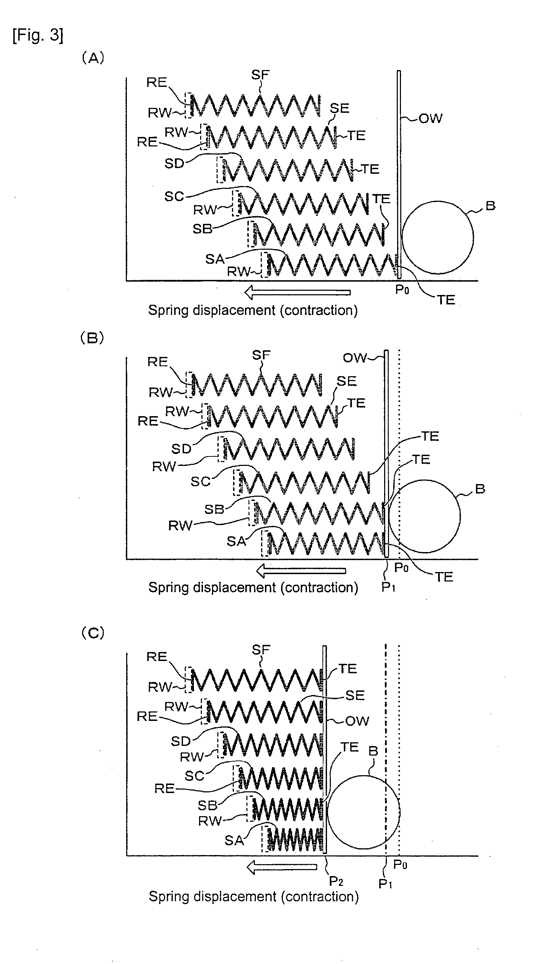

Next, how to change the spring constant to be used according to the displacement is explained by referring to Fig. 3. Fig. 3 is an explanation drawing showing how the number of springs used in pedal force detection changes when the timing at which compression of each of the multiple springs starts is offset. As shown in Fig. 3 (A), six springs SA to SF of the same length and spring constant are all positioned with a slight offset. These springs SA to SF have their rear end RE fixed to the pressure-receiving wall RW on the fixed side, while their front end TE makes contact with the pressing wall OW that displaces according to the movement of the ball B and gets compressed as a result. Fig. 3 (A) shows the condition before compressive force is applied, where the pressing wall OW is contacting the front end TE of the spring SA at the position P₀. When the ball B moves the pressing wall OW to the position P₁, as shown in Fig. 3 (B), in the direction of the arrow shown in the figure, the spring SA is compressed and at the same time the pressing wall OW contacts the front end TE of the spring SB. In other words, one spring is utilized when a force that moves the pressing wall OW from the position P₀ to P₁ is applied. Furthermore when the pressing wall OW is moved in the direction of the arrow, compression of the springs SB, SC, SD, SE starts one by one. In other words, a total of five springs from SA to SE are utilized when a force that moves the pressing wall OW to the position P₂ corresponding to the front end TE of the spring SF is applied. If a force that moves the pressing wall OW to the left of the position P₂ in the figure is applied further, all six springs are utilized. According to Fig. 3, a torque detection device having a characteristic curve similar to that of the composite spring constant represented by spring constant k = aₘᵢₓ in Fig. 2 (C) can be obtained by using the springs SA to SF having varying spring constants from small to large.

As explained above, when a force that displaces the pressing wall OW changes, the number of springs utilized according to the size of this force also changes, which means that the composite spring constant of multiple springs connected in parallel changes according to the sum of their spring constants. Even when only springs of small spring constant are used, therefore, the multiple springs can be positioned at staggered compression start timings so as to minimize the impact of spring variation and reduce detection error, while achieving characteristics that allow for detection of a wide range of pedal forces.

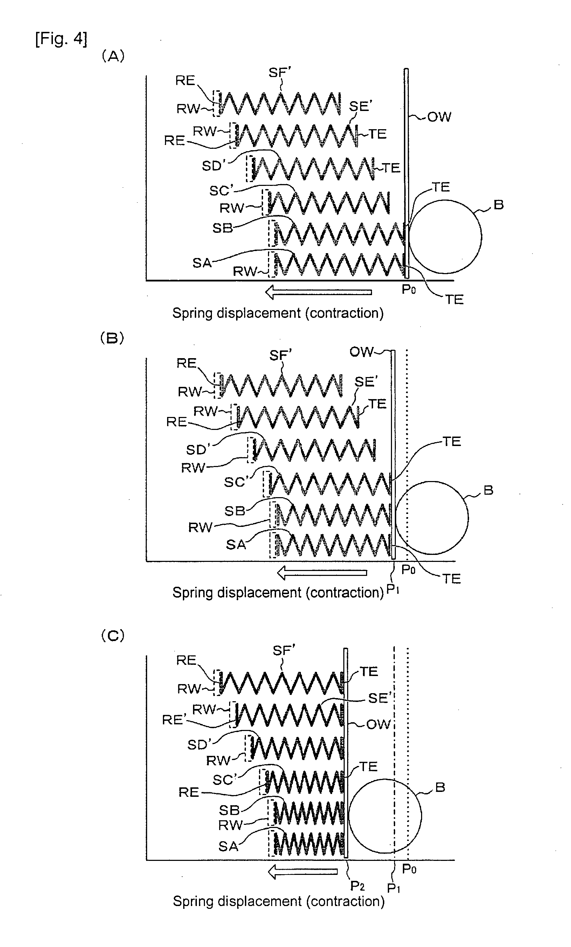

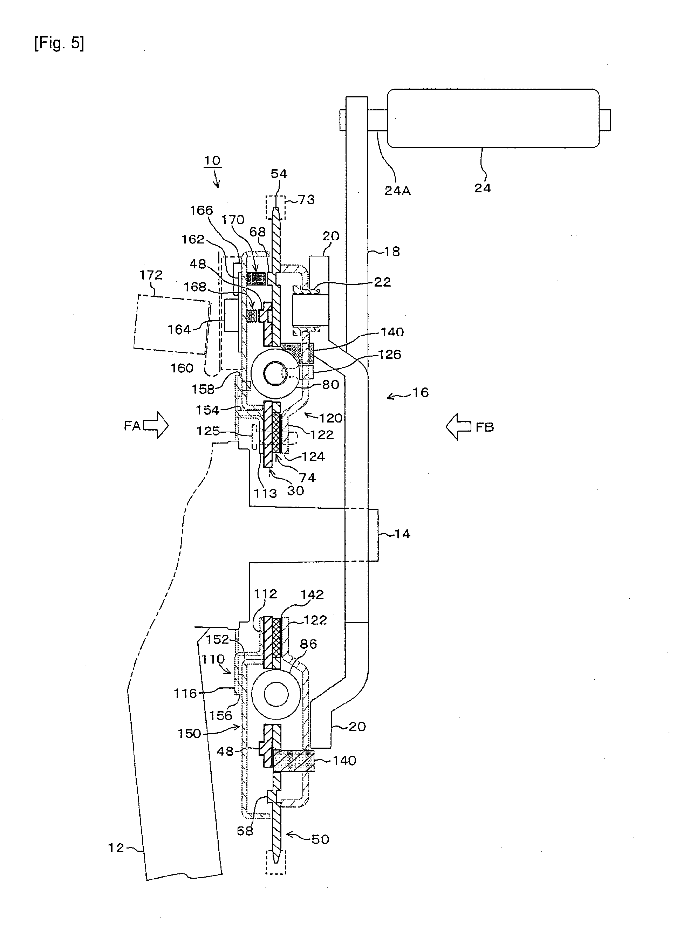

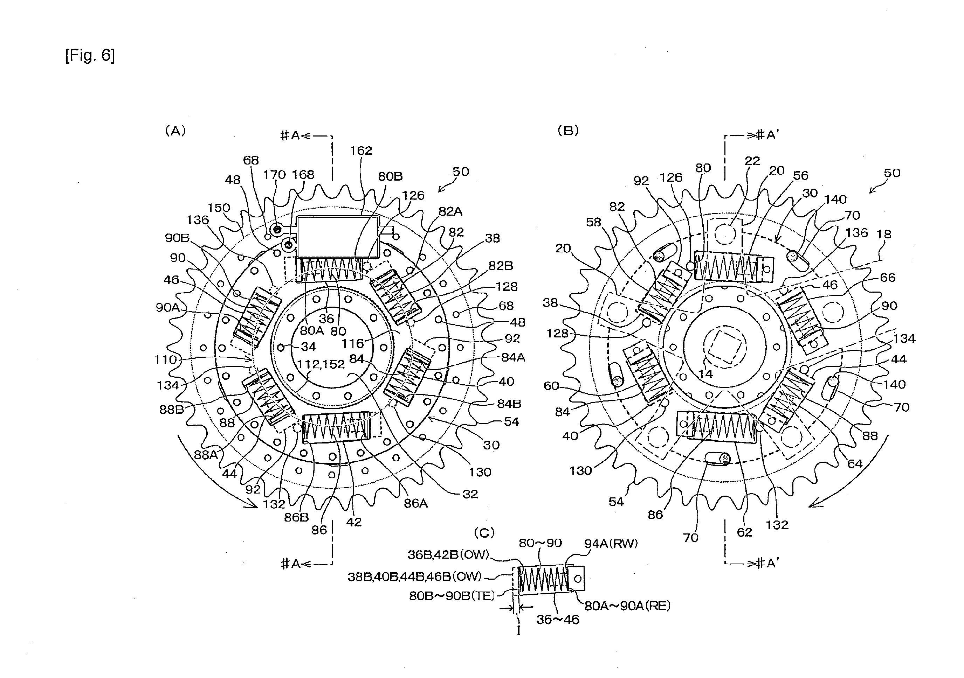

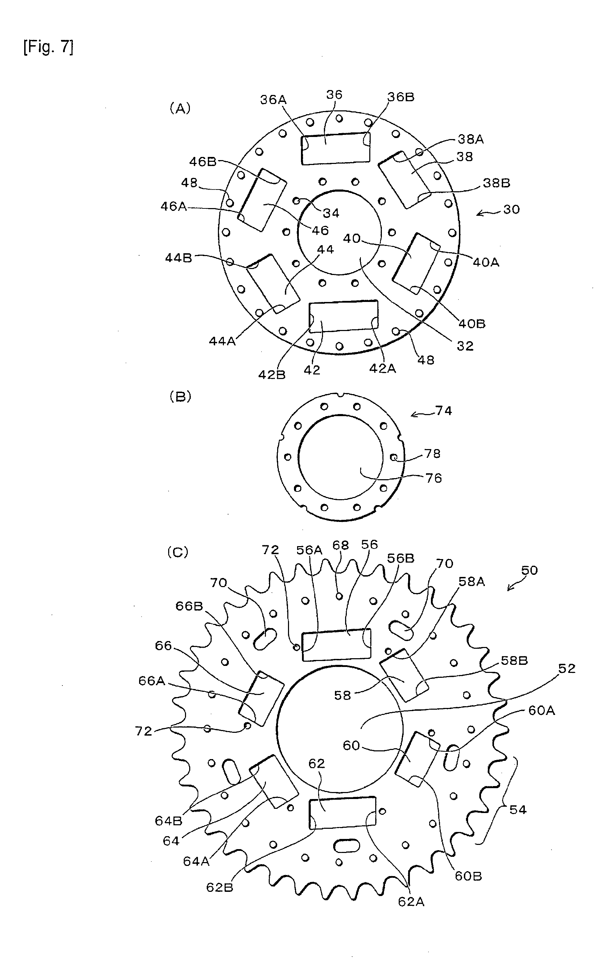

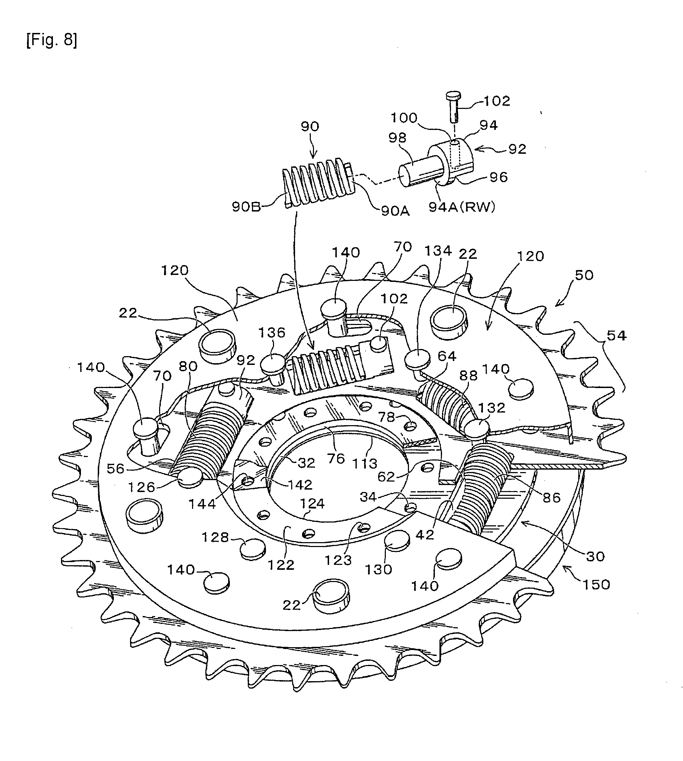

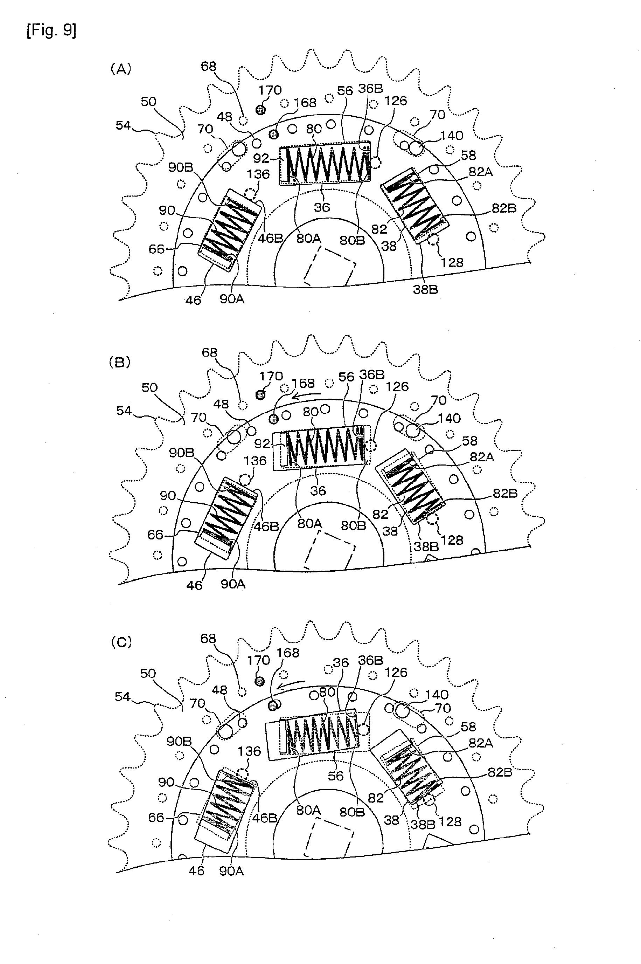

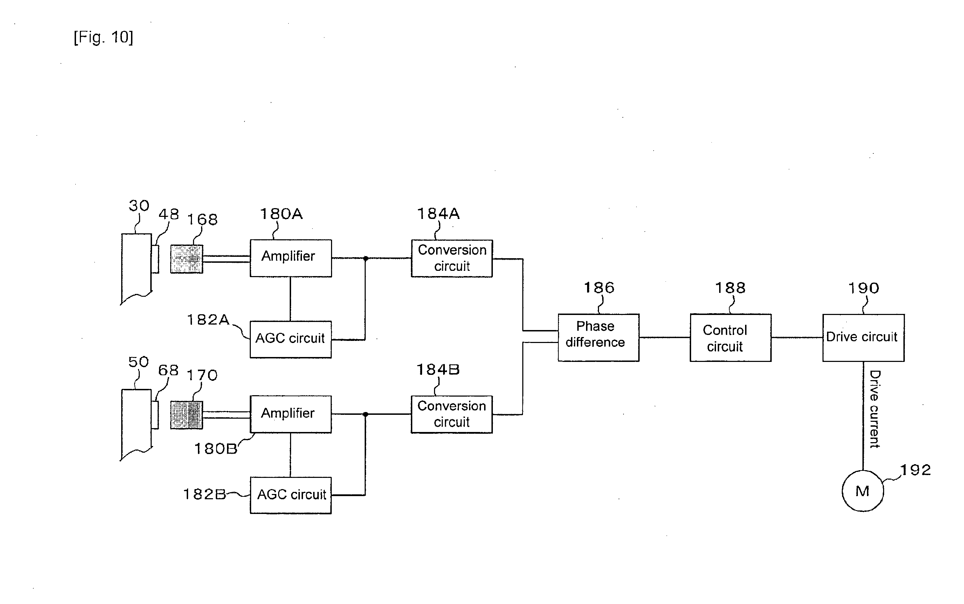

Next, a device constitution that can achieve the aforementioned staggered compression start timings of multiple springs is explained by referring to Figs. 4 to 10. Fig. 4 is an explanation drawing where Fig. 3 above corresponds to the device constitution illustrated in Figs. 5 to 10. Fig. 5 is a section view showing main parts of an electrically-assisted bicycle on which the pedal force sensor in this example is installed. Fig. 6 (A) is a plan view of Fig. 5 seen from the direction of the arrow FA, Fig. 6 (B) is a plan view of Fig. 5 seen from the direction of the arrow FB, and Fig. 6 (C) is a plan view of the spring stored in the first opening seen from the sprocket side. Note that Fig. 5 corresponds to a section view of #A-#A in Fig. 6 (A) and section view of #A'-#A' in Fig. 6 (B). Fig. 7 (A) is a plan view of the drive wheel, Fig. 7 (B) is a plan view of the crank internal gear, and Fig. 7 (C) is a plan view of the sprocket (crank external gear), all seen from the direction of the arrow FA in Fig. 5. Fig. 8 is a perspective view showing the internal structure of the pedal force sensor in this example, while Fig. 9 is a drawing explaining the operation of this example. Fig. 10 is a drawing showing an example of the detection circuit in this example.

As shown in Fig. 4, in this example two springs SA, SB of the same length are placed at the same position, with springs SC' to SF' shorter than the springs SA, SB placed at slightly staggered positions. Here, the springs SA, SB are assumed to have a spring constant which is one half the spring constant of the other springs SC' to SF', for example. These springs SA, SB, SC' to SF' have their rear end RE fixed to the pressure-receiving wall RW on the fixed side, while the front end TE makes contact with the pressing wall OW that displaces according to the movement of the ball B and gets compressed as a result. Fig. 4 (A) shows the condition before compressive force is applied, where the pressing wall OW is contacting the front ends TE of the two springs SA, SB at the position P₀. When the ball B is used to move the pressing wall OW from this condition to the position P₁, as shown in Fig. 4 (B), in the direction of the arrow shown in the figure, the two springs SA, SB are compressed and at the same time the pressing wall OW contacts the front end TE of the spring SC'. In other words, two springs are utilized when a force that moves the pressing wall OW from the position P₀ to P₁ is applied. Furthermore when the pressing wall OW is moved in the direction of the arrow, compression of the springs SC', SD', SE' starts one by one. In other words, a total of five springs including the long springs SA, SB and short springs SC', SD', SE' are utilized when a force that moves the pressing wall OW to the position P₂ corresponding to the front end TE of the spring SF' is applied. If a force that moves the pressing wall OW to the left of the position P₂ in the figure is applied further, all six springs are utilized. By using two springs in parallel this way, where the springs have a spring constant being one half the spring constant of the other spring, variations associated with the two springs can be averaged. In addition, the composite spring constant can be increased gradually by staggering the positions of four springs having the same spring constant. A characteristic spring curve that rises gradually can also be achieved.
A pedal force detection device that utilizes this principle is explained below.

A pedal force sensor 10 in this example is constituted primarily by a drive wheel (crank internal plate) 30, a sprocket (crank external gear) 50, a crank internal gear 74, multiple coil springs (hereinafter referred to as "springs") 80 to 90 and means for compressing them, multiple projections 48 provided on the drive wheel 30, multiple projections 68 provided on the sprocket 50, and non-contact sensors 168, 170 that detect these projections 48, 68. The pedal force sensor 10 also includes a rotary plate 110, a crank external cover 120, a sensor cover 150 and a rotation-limiting mechanism, among others. The respective parts are explained one by one.

The drive wheel 30 is installed on a crankshaft 14 supported on a bicycle frame 12 in a rotatable manner, in such a way that it rotates together with the crankshaft 14. As shown in Fig. 5, a crank 16 is fixed on the crankshaft 14, and a pedal shaft 24A of a pedal 24 is installed on the front end of an arm 18 of the crank 16. Multiple locking arms 20 (four arms in the example shown in Fig. 6 (B)) of the crank 16 are fixed, by means of mounting nuts 22, on the crank external cover 120 explained later. As explained later, the crank external cover 120 is fixed on the drive wheel 30 via the crank internal gear 74. As a result, the pedal 24 stepping motion is converted to rotary motion of the crank 16 and transmitted to the crankshaft 14, whereupon the crankshaft 14 rotates, and the crank external cover 120, crank internal gear 74 and drive wheel 30 to which the crank 16 is fixed also rotate together.

As shown in Fig. 7 (A), the drive wheel 30 has roughly a disk shape where an opening 32 through which the crankshaft 14 can be guided is formed at the center, and multiple holes 34 through which to guide the rivets 125 (see Fig. 5) explained later for integrally securing the crank external cover 120, crank internal gear 74 and rotary plate 110 are formed roughly at an equal pitch near the edge of the opening 32. Also, multiple first openings 36 to 46 are provided roughly at an equal pitch along a circumferential path on the outer periphery side of the multiple holes 34. These first openings 36, 38, 40, 42, 44, 46 are set as deemed appropriate according to the dimensions of the springs 80, 82, 84, 86, 88, 90 stored inside and timings at which to start compressing these springs 80, 82, 84, 86, 88, 90. In this example, for example, the first opening 36 and first opening 42 facing the opening 36 are formed with the same dimensions, and the long springs 80, 86 are stored in these openings, respectively. In addition, the first openings 38, 40, 44, 46 are shorter than the first openings 36, 42, and store the short springs 82, 84, 88, 90, respectively. Note that the springs 80, 86 are of the same length, while the other springs 82, 84, 88, 90 are also of the same length which is shorter than the springs 80, 86. These springs 80 to 90 each have one of two spring constants. In other words, the springs are divided into two types, namely the springs 80, 86 having a small spring constant and long length, and springs 82, 84, 88, 90 having a large spring constant and short length. The long springs 80, 86 correspond to the springs SA, SB in Fig. 4 above, while the short springs 82, 84, 88, 90 correspond to the springs SC', SD', SE', SF' in Fig. 4 above.

Fig. 6 (A) shows a condition where the springs 80 to 90 are stored. As shown in this figure, the first openings 36, 42 in which to store the long springs 80, 86, such as SWB12-30 by Misumi, have their dimensions set in such a way that no gaps will form between their opening edges 36B, 42B and free ends 80B, 86B of the springs 80, 86. On the other hand, the first openings 38, 40, 44, 46 in which to store the short springs 82, 84, 88, 90, such as SWB12-20 by Misumi, each have a slightly different length. In the example shown in Fig. 6 (A), for example, the gap between the end 82B of the spring 82 and the opening edge 38B is the narrowest, with the dimensions of the gaps between the end 84B of the spring 84 and the opening edge 40B, between the end 88B of the spring 88 and the opening edge 44B and between the end 90B of the spring 90 and the opening edge 46B increasing gradually.

These gaps are indicated by I in Fig. 6 (C). As shown in Fig. 6 (C), the opening edges 36B to 46B of the first openings 36 to 46 are considered the pressing wall OW shown in Fig. 4, while an end face 94A of a spring support 92 explained later is considered the pressure-receiving wall RW in Fig. 4. If the ends 80A to 90A of the springs 80 to 90 are considered the rear ends RE of the springs in Fig. 4 and ends 80B to 90B of the springs 80 to 90 are considered the front ends TE of the springs in Fig. 4, then the gap I corresponds to the adjustment width of the contact position (four contact positions in the range of positions P₁ to P₂ in Fig. 4) of the pressing wall OW when pedal force is applied to the springs 82, 84, 86, 88. Furthermore, multiple projections 48 are provided roughly at an equal pitch on the drive wheel 30 along a circumferential path on the outer side of the first openings 36 to 46. These multiple projections 48 are detected by the first non-contact sensor 168 explained later.

The drive wheel 30 having the above constitution is coupled to the bicycle frame 12 via the rotary plate 110 in a rotatable manner, as shown in Fig. 5. The rotary plate 110 has a flange 116 on the outer side of a concaved section 112 in which an opening 113 is formed. The concaved section 112 has holes 114 (not illustrated) for guiding the aforementioned rivets 125, formed at positions corresponding to the holes 34 in the drive wheel 30 by the same number as the holes.

Next, the sprocket (crank external gear) 50 and crank internal gear 74 are explained. The crank internal gear 74 has roughly a ring shape where an opening 76 through which to guide the crankshaft 14 is formed at the center, as shown in Fig. 7 (B), and multiple holes 78 are formed roughly at an equal pitch around the opening 76. These holes 78 are formed at such positions and pitch that will allow them to align with the holes 34 in the drive wheel 30 when the drive wheel 30 and crank internal gear 74 are placed on top of each other.

The sprocket 50 is placed on the outer side of the crank internal gear 74 and the diameter of its center opening 52 is set slightly larger than the outer diameter of the crank internal gear 74. This means that, even when the drive wheel 30 and crank internal gear 74 rotate together with the crankshaft 14, their rotational force will not be transmitted directly to the sprocket 50. Therefore, multiple springs 80 to 90 are used to indirectly couple the drive wheel 30 and sprocket 50. On the sprocket 50, multiple second openings 56, 56, 58, 60, 62, 64, 66 are formed at positions corresponding to the multiple first openings 36, 38, 40, 42, 44, 46 when the drive wheel 30 is put together, and the springs 80 to 90 are commonly stored in the corresponding first and second openings. In Fig. 6, the long spring 80 is stored in the first opening 36 and second opening 56, short spring 82 is stored in the first opening 38 and second opening 58, short spring 84 is stored in the first opening 40 and second opening 60, long spring 86 is stored in the first opening 42 and second opening 62, short spring 88 is stored in the first opening 44 and second opening 64, and short spring 90 is stored in the first opening 46 and second opening 66. Note that the second openings 56 to 66 are different from the first openings 36 to 46 in that the dimensions of these openings are set in such a way that virtually no gaps are left between the ends 80B, 82B, 84B, 86B, 88B, 90B of the stored springs 80 to 90 and the opening edges 56B, 58B, 60B, 62B, 64B, 66B. Also, a screw hole 72 for screwing in a screw 102 is provided near one end 56A, 58A, 60A, 62A, 64A, 66A of the second openings 56 to 66, respectively.

To commonly store and retain the springs 80 to 90 in the first and second openings, the spring support 92 shown in Fig. 8 is used in this example. This spring support 92 has a structure whereby a rod 98 is provided at an installation base 94 of roughly column shape, and the end face 94A of this installation base 94 providing the foundation of this rod 98 constitutes one of the spring compression means as the pressure-receiving wall RW contacted by the ends 80A, 82A, 84A, 86A, 88A, 90A of the springs 80 to 90. Furthermore, a step 96 and a screw hole 100 are formed at the installation base 94. The springs 80 to 90 are guided through the rods 98 in such a way that their ends 80A to 90A are oriented toward the installation bases 94. Then, the screw 102 is connected by aligning the screw hole 100 at the installation base 94 with the screw hole 72 in the sprocket 50 in such a way that the step 96 at the installation base 94 comes in contact with the opening edges 56A, 58A, 60A, 62A, 64A, 66A of the second openings 56 to 66 in the sprocket 50, respectively, to allow the springs 80 to 90 to be commonly stored in the first openings and second openings at the corresponding positions. In other words, the drive wheel 30 and sprocket 50 are indirectly coupled by these springs 80 to 90. Note that the springs 80 to 90 are compressed according to the amount of rotation of the drive wheel 30, in the circumferential direction of the wheel, by interacting with the other spring compression means explained later. When the drive wheel 30 is not rotating, the springs 80 to 90 are supported in an expandable/contractible manner on the rods 98 of the spring supports 92 so that their shape can be restored. Note that, while the aforementioned spring support 92 is constituted in such a way that it is fixed to the sprocket 50 by means of screw 102 connection, the fixing means need not be a screw connection. It is sufficient that the springs 80 to 90 are stored in the openings constituted by a combination of the first openings 36 to 46 and second openings 56 to 66 facing these first openings 36 to 46, where the springs should be retained in the openings constituted by the aforementioned combination of openings by any means other than the spring support 92.

A gear 54 is formed on the outer periphery of the sprocket 50 and a chain 73 (see Fig. 5) for driving the bicycle propelling wheel (rear wheel) is passed on the gear 54. Accordingly, the rotational force given to the crankshaft 14 is indirectly transmitted to the sprocket 50 from the drive wheel 30 via the springs 80 to 90. The force is further transmitted from the sprocket 50 to the propelling wheel via the chain 73. Also, multiple projections 68 are provided roughly at an equal pitch on the main drive wheel side of the sprocket 50 near the outer periphery. The multiple projections 68 are equal in number to the projections 48 on the drive wheel 30 and detected by the second non-contact sensor 170 explained later. These projections 48, 68 are used to detect the phase difference of the drive wheel 30 and sprocket 50 and when no load is applied, they are adjusted so as not to cause position shift, as shown in Fig. 9 (A). In addition, multiple (five in the example shown) elongated holes 70 are provided in the sprocket 50 between the circumference path of the second openings 56, 58, 60, 62, 64, 66 and circumferential path of the multiple projections 68. These elongated holes 70 are used to regulate the movement range of rotation-limiting pins 140 explained later so as to prevent the rotational deviation between the drive wheel 30 and sprocket 50 from exceeding a certain range.

A crank external cover 120 is provided on the main pedal 24 side of the sprocket 50 described above. As shown in Fig. 5, the crank external cover 120 is formed in a concaved section 122 whose center is of roughly the same shape as the crank internal gear 74, so that when put together with the sprocket 50 and crank internal gear 74, it will only contact the crank internal gear 74, and an opening 124 through which to guide the crankshaft 14 is formed at the center of the cover. The concaved section 122 also has multiple holes 123 for guiding the rivets 125 at positions corresponding to the holes 34 in the drive wheel 30 and holes 78 in the crank internal gear 74. The outer side of the concaved section 122 is raised by keeping a specified interval from the surface of the sprocket 50, in such a way that expansion/contraction of the springs 80 to 90 installed in the sprocket 50 will not be prevented.

This crank external cover 120 is secured by the locking arms 20 of the crank 16 and mounting nuts 22. Accordingly, as the holes 114 in the rotary plate 110, holes 34 in the drive wheel 30, holes 78 in the crank internal gear 74 and holes 123 in the concaved section 122 of the crank external cover 120 are aligned and the rivets 125 are driven in securely, the crankshaft 14 will rotate when the pedal 24 is operated and at the same time the rotary plate 110, drive wheel 30, crank internal gear 74, and crank external cover 120 will rotate together. At this time, although the sprocket 50 is indirectly coupled to the drive wheel 30 by the springs 80 to 90, there is a slight delay after the drive wheel 30 starts rotating until the sprocket 50 starts rotating, because torque is applied by the chain 73 in the direction opposite the rotating direction of the drive wheel 30. Note that a spacer 142 shown in Figs. 5 and 8 is provided as deemed necessary between the concaved section 122 of the crank external cover 120 and the crank external gear 74. The spacer 142 has multiple holes 144 formed in it at positions corresponding to the holes 114, 34, 78, 123.

Furthermore, the crank external cover 120 has multiple pins 126, 128, 130, 132, 134, 136 (six in the example shown in the figure) provided at positions that roughly correspond to the opening edges 36B, 38B, 40B, 42B, 44B, 46B of the first openings 36 to 46 when the cover is fixed to the drive wheel 30. These pins 126 to 136 compress the ends 80B to 90B of the springs 80 to 90 together with the opening edges 36B to 46B according to the amount of rotation of the drive wheel 30, and are set to a length that does not reach the sprocket 50. In other words, in this example, the pins 126 to 136 are positioned in a manner contacting the ends 80B to 90B at the same timings when the opening edges 36B to 46B contact the ends 80B to 90B of the springs 80 to 90, and consequently both the opening edges 36B to 46B and pins 126 to 136 constitute the other spring compression means, or specifically the pressing wall OW. In addition, the crank external cover 120 has multiple rotation-limiting pins 140 provided at positions corresponding to the elongated holes 70 in the sprocket 50. The rotation-limiting pins 140 are set to a length that does not reach the drive wheel 30, and can only move within the elongated holes 70. Accordingly, if the drive wheel 30 and crank external cover 120 rotate integrally and the sprocket 50 starts rotating with a delay after the drive wheel 30, this rotational deviation will become the greatest when the rotation-limiting pins 140 contact the edges of the elongated holes 70, after which the sprocket 50 will rotate together with the drive wheel 30.

Next, the sensor for detecting phase difference is explained. The sensor cover 150 is positioned on the drive wheel 30 side and fixed to the bicycle frame 12 by a sensor-locking plate 172, so that it will not rotate integrally with the drive wheel 30. As shown in Fig. 5, the concaved section 112 of the rotary plate 110 is stored via a slider 154 inside an opening 152 in the sensor cover 150, and other sliders 156, 158 are provided at appropriate positions between the flange 114 of the rotary plate 110 and the sensor cover 150.

Also, a sensor base 160 is provided on the outer side, or bicycle frame 12 side, of the sensor cover 150. A sensor board 162 and sensor bobbins 164, 166 are provided in the sensor base 160, while the first non-contact sensor 168 is provided inside the sensor cover 150 at a position corresponding to the bobbin 164, and the second contact sensor 170 is provided at a position corresponding to the bobbin 166. The first non-contact sensor 168 is positioned in a non-contacting state at a position where the projections 48 on the drive wheel 30 can be detected, while the second non-contact sensor 170 is positioned in a non-contacting state at a position where the projections 68 on the sprocket 150 can be detected. In other words, signals generate from the sensors 168, 170 when the projections 48, 68 come to the positions facing the first non-contact sensor 168 and second non-contact sensor 170.

Next, the operation of this example is explained by also referring to Fig. 9. Fig. 9 (A) shows a condition where neither the drive wheel 30 nor sprocket 50 is receiving load, or both are in the same loaded condition, or specifically when the pedal 24 is not stepped on. At this time, the projections 48 on the drive wheel 30 and projections 68 on the sprocket are at the same positions and same circumferential angles, and signals generated by the non-contact sensors 168, 170 have no deviation (phase difference). Also, the ends 80B, 86B of the long springs 80, 86 are virtually contacting the pins 126, 132 together with the opening edges 36B, 42B of the first openings 36, 42, while the ends 82A, 84A, 88A, 90A of the other springs 82, 84, 88, 90 form specified gaps between the opening edges 38B, 40B, 44B, 46B and pins 128, 130, 134, 136.

At the time of initial actuation or when accelerating while riding, the pedal 24 is stepped on in the condition shown in Fig. 9 (A), where the pedal 24 stepping force rotates the crankshaft 14 via the crank 16 and is also transmitted to the crank external cover 150, crank internal gear 74, drive wheel 30 and rotary plate 110 to rotate them integrally. In this example, the drive wheel 30 and sprocket 50 are indirectly coupled by the springs 80 to 90, and when the pedal 24 is stepped on, torque is applied to the sprocket 50 by the rear wheel coupled via the chain 73 in the direction opposite the pedal force applied to the drive wheel 30, and therefore the difference between the torque applied to the drive wheel 30 and torque applied to the sprocket 50 compresses the springs 80 to 90 to generate a relative position shift between the drive wheel 30 and sprocket 50.

Fig. 9 (B) shows a condition where rotation of the drive wheel 30 has caused a relative position shift with the sprocket 50. In Fig. 9 (B), the end 80B (86B) of the spring 80 (86) is compressed by the opening edge 36B (42B) of the drive wheel 30 and the pin 126 (132), with the end 82B of the spring 82 contacting the opening edge 38B and pin 128. If the drive wheel 30 rotates further, the springs are compressed one by one, starting from the one having the narrowest interval with the compression means, or specifically in the order of the springs 82, 84, 88, 90 in this example. This relative position shift between the drive wheel 30 and sprocket 50 will remain until the rotation-limiting pins 140 provided on the crank external cover 150 that rotates integrally with the drive wheel 30 contact the edges of the elongated holes 70 in the sprocket 50. Once the rotation-limiting pins 140 contact the edges of the elongated holes 70, no further position shift will generate and the pedal 24 stepping force will be transmitted to the rear wheel via the chain 73 passed over the sprocket 50. In Fig. 9 (C), the relative position shift between the drive wheel 30 and sprocket 50 is the greatest and the end 90B of the spring 90 is compressed by the opening edge 46B and pin 136.

While the condition changes from Fig. 9 (A) to Fig. 9 (C), the projections 48 on the drive wheel 30 move relatively to the projections 68 on the sprocket 50, and the number of compressed springs changes at the same time. The relative position shift between the projections 48, 68 can be detected from the signal deviation between the non-contact sensors 168, 170. In the detection circuit shown in Fig. 10, detection signals from the non-contact sensors 168, 170 are amplified by amplifiers 180A, 180B, respectively. Here, detection signals from the non-contact sensors 168, 170 do not always have stable gains and their gains are therefore adjusted using AGC (automatic gain control) circuits 182A, 182B, respectively. Output signals from the amplifiers 180A, 180B that have been gain-adjusted by these AGC circuits 182A, 182B are converted to rectangular pulses by conversion circuits 184A, 184B, respectively.

Converted rectangular pulse signals are supplied to a phase difference detection circuit 186 where their phase difference is detected, after which the detection result is supplied to a control circuit 188. The control circuit 188 generates a control signal according to the detection result of the phase difference detection circuit 186 and an electric motor 192 is driven according to this control signal. In other words, power supply to the electric motor 192 by the drive circuit 190 is controlled based on the control signal from the control circuit 188. This allows for assistive driving of the electric motor 192 according to the pedal force detection result. As for the relative position shift between the drive wheel 30 and sprocket 50, since the springs 80 to 90 return to their original condition due to resilience once the pedal force is removed, signals from the non-contact sensors 168, 170 no longer have phase difference.

As explained above, Example 1 has the following effects:
(1) In detecting the pedal force from the phase difference between the drive wheel 30 and sprocket 50 by indirectly coupling via the multiple springs 80 to 90 the drive wheel 30 fixed to the crankshaft 14 and the sprocket 50 that transmits the rotational force of the crankshaft 14 to the propelling wheel, the respective parts are positioned by setting intervals between the ends 80B, 82B, 84B, 86B, 88B, 90B of the springs 80 to 90 on one hand, and one elastic body compression means or specifically the first opening edges 36B, 38B, 40B, 42B, 44B, 46B and pins 126, 128, 130, 132, 134, 136 on the other. As a result, the relationship of displacement and pedal force becomes nonlinear and a wide range of pedal forces can be detected.
(2) Since large displacement occurs when the pedal force is small, or specifically when the pedal force affected by the variation in the spring length or installation position is small, any variation can be absorbed and detection accuracy can be raised, and at the same time a condition where the pedal force increases at the start of pedaling on an electrically-assisted bicycle can be detected in a favorable manner. As a result, the amount of assist can be controlled properly.
(3) Since the long springs 80, 86 at opposed positions are compressed at the same time at first, stability increases.

It should be noted that the present invention is not at all limited to the aforementioned example and various changes may be added to the extent that they do not deviate from the purpose of the present invention. For example, the following are also included in the present invention:
(1) The shapes and dimensions of respective parts shown in the aforementioned example are only examples and may be changed as deemed necessary and appropriate to the extent that similar effects can be achieved. For example, the sizes of the first openings 36 to 46 and second openings 56 to 66 can be set according to the lengths of the springs 80 to 90.
(2) The intervals between the spring ends 80B to 90B and the opening edges 36B to 46B of the first openings 36 to 46, and intervals (offsets) between the spring ends 80B to 90B and the pins 126 to 136, are also examples and may be changed as deemed appropriate according to how the staggered compression start timings are set. Also in the example, the end face 94A at the installation base of the spring support 92 constitute one spring compression means, while the opening edges 36B to 46B and pins 126 to 136 constitute the other spring compression means. However, this is also an example and only the opening edges 36B to 46B may be used as the other spring compression means. Furthermore, these spring compression means themselves are examples and the design may be changed as deemed appropriate so that similar effects can be achieved.
(3) The spring support mechanism by the spring support 92 shown in the aforementioned example is only an example and the design may be changed as deemed appropriate so that similar effects can be achieved. For example, thin grooves can be provided near the edges of either the first openings 36 to 46 or second openings 56 to 66 by angling the grooves relative to the opening edges, after which the ends of the springs 80 to 90 are inserted in these grooves to retain the springs.
(4) Alternatively, opposed retention parts of an L-shaped cross-section can be provided around the edges of the first openings 36 to 46 and second openings 56 to 66 in order to retain the springs 80 to 90 in a manner preventing the springs 80 to 90 from projecting from the pair of openings constituted by the first openings 36 to 46 and second openings 56 to 66.
(5) Furthermore, thin grooves may be provided by angling them relative to the opening edges as described in (3) above, instead of the retention parts of the L-shaped cross-section in (4), to allow for measurement of torque by pulling, not compressing, the springs.
(6) The specific device example in Example 1 utilized six springs including long springs 80, 86 and shorter springs 82, 84, 88, 90, but these are also examples, and multiple springs all having the same length and same spring constant can be used and positioned in such a way to stagger the timings at which their compression starts or multiple springs of the same length but different spring constant can also be used. Even when the multiple springs have the same length and spring constant, similar effects to those in Example 1 can be achieved by determining their positions in such a way to stagger the timings at which their compression starts; however, mixed use of springs of different lengths and spring constants can achieve pedal force characteristics closer to the desired characteristics.
(7) The numbers of first openings 36 to 46, second openings 56 to 66, projections 48, 68 and elongated holes 70, and positions of circumferential paths along which they are provided, are also examples and may be changed as deemed appropriate to the extent that similar effects can be achieved.
(8) The coupling structure of the crank 16 and crankshaft 14 is also an example and any of the various known coupling mechanisms may be used as long as the crank 16, crank shaft 14, and drive wheel 30 can be rotated integrally.
(9) The detection circuit shown in Fig. 10 is also an example and any of the various known detection circuits may be used to the extent that similar effects can be achieved.
(10) The rotation-limiting mechanism illustrated in the aforementioned example is also an example and the design may be changed as deemed appropriate, such as providing regulating holes (elongated holes 70) in the drive wheel 30 and pins 126 to 136 in the sprocket 50, to the extent that similar effects can be achieved.
(11) In the aforementioned example, coil springs 80 to 90 were used as elastic bodies. However, this is also an example and resin elastic bodies, elastic metal pieces, types that seal air and other gases or oil and other liquids, or cylinders combined with springs, can also be utilized. In any event, any of the various known elastic bodies can be utilized as long as it has long-term resilience within the pedal force detection range.
(12) Nonlinear output of pedal force may be linearly corrected by software and used to provide assist proportionally to the pedal force.
(13) The pedal force sensor conforming to the present invention was installed on an electrically-assisted bicycle in the aforementioned example, but this is also an example and the present invention may be applied to any of the various other known electrical vehicles requiring detection of pedal force, such as electrically-assisted wheelchairs.

### Industrial Field of Application

According to the present invention, multiple elastic bodies are used to indirectly couple a drive wheel fixed to a crankshaft, and a sprocket that transmits the rotational force of the crankshaft to a propelling wheel, to detect the pedal force based on the phase difference between the drive wheel and sprocket, in such a way that the distances between elastic bodies and elastic body compression means are set so that the compression start timings of the multiple elastic bodies are staggered. In addition to this positioning, multiple elastic bodies of different lengths and moduli of elasticity are utilized as necessary to make the relationship between the amount of displacement and pedal force nonlinear so as to approximate desired detection characteristics, and therefore the present invention can be applied to pedal force sensors. In particular, detection accuracy at small pedal force can be improved and, as a wide range of pedal forces can be detected, sufficient assist can be provided at the time of initial actuation and acceleration, which is ideal for electrically-assisted bicycles and other applications.

### Description of the Symbols

10: Pedal force sensor
12: Bicycle frame
14: Crankshaft
16: Crank
18: Arm
20: Locking arm
22: Mounting nut
24: Pedal
24A: Pedal shaft
30: Drive wheel (crank internal plate)
32: Opening
34: Hole
36, 38, 40, 42, 44, 46: First opening
36A, 36B, 38A, 38B, 40A, 40B, 42A, 42B, 44A, 44B, 46A, 46B: Opening edge
48: Projection
50: Sprocket (crank external gear)
52: Opening
54: Gear
56, 58, 60, 62, 64, 66: Second opening
56A, 56B, 58A, 58B, 60A, 60B, 62A, 62B, 64A, 64B, 66A, 66B: Opening edge
68: Projection
70: Elongated hole
72: Screw hole
73: Chain
74: Crank internal gear
76: Opening
78: Hole
80, 82, 84, 86, 88, 90: Coil spring
80A, 80B, 82A, 82B, 84A, 84B, 86A, 86B, 88A, 88B, 90A, 90B: End
92: Spring support
94: Installation base
94A: End face
96: Step
98: Rod
100: Screw hole
102: Screw
110: Rotary plate
112: Concaved section
113: Opening
114: Hole
116: Flange
120: Crank external cover
122: Concaved section
123: Hole
124: Opening
125: Rivet
126, 128, 130, 132, 134, 136: Pin
140: Rotation-limiting pin
142: Spacer
144: Hole
150: Sensor cover
152: Opening
154, 156,158: Slider
160: Sensor base
162: Sensor board
164, 166: Sensor bobbin
168, 170: Non-contact sensor
172: Sensor locking plate
180A, 180B: Amplifier
182A, 182B: AGC circuit
184A, 184B: Conversion circuit
186: Phase difference detection circuit
188: Control circuit
190: Drive circuit
192: Electric motor
B: Ball
SA to SF, SC' to SF': Spring
RE: Rear end of spring
TE: Front end of spring
RW: Pressure-receiving wall
OW: Pressing wall

## Claims

1. A pedal force sensor **characterized by** comprising:
a drive wheel of roughly plate-like shape that is fixed at right angles to a crankshaft and rotates together with the crankshaft;
a sprocket of roughly plate-like shape that is positioned opposed to the drive wheel and transmits the rotational force given to the crankshaft to a propelling wheel;
multiple pressing means provided on the drive wheel side;
multiple pressure-receiving means provided on the sprocket side in a manner facing the pressing means;
multiple elastic bodies that each indirectly couple the drive wheel and sprocket between the pair of pressing means and pressure-receiving means and also expand/contract in the circumferential direction according to the amount of rotational displacement between the drive wheel and sprocket; and
a sensor that detects the relative rotational phase difference between the drive wheel and sprocket;
wherein the multiple pairs of pressing means and pressure-receiving means are positioned in such a way that expansion/contraction of the multiple elastic bodies between the pressing means and pressure-receiving means starts at multiple timings.

2. A pedal force sensor according to Claim 1, **characterized in that**:
the multiple pressing means are provided on one side of opening edges of multiple first openings formed apart along a desired circumferential path of the drive wheel;
the multiple pressure-receiving means are provided on the other side of opening edges of multiple second openings formed in the sprocket at positions facing the multiple first openings; and
the elastic bodies are commonly stored in both the first openings and corresponding second openings so as to indirectly couple the sprocket to the drive wheel.

3. A pedal force sensor **characterized by** comprising:
a drive wheel of roughly plate-like shape that is fixed at right angles to a crankshaft and rotates together with the crankshaft;
a sprocket of roughly plate-like shape that is positioned opposed to the drive wheel and transmits the rotational force given to the crankshaft to a propelling wheel;
multiple first openings formed apart along a desired circumferential path of the drive wheel;
multiple second openings formed in the sprocket at positions corresponding to the multiple first openings;
multiple elastic bodies that are commonly stored in both the first openings and corresponding second openings and indirectly couple the sprocket to the drive wheel, while being expandable/contractible in the circumferential direction according to the amount of rotation of the drive wheel;
multiple elastic body compression means that apply compressive force to the multiple elastic bodies in the circumferential direction according to the amount of rotation of the drive wheel;
multiple first detection target parts provided on the drive wheel roughly at an equal pitch along a circumferential path different from that of the first openings;
multiple second detection target parts provided by the same number as the first detection target parts on the sprocket roughly at an equal pitch along a circumferential path different from that of the second openings and first detection target parts;
a first non-contact sensor provided at a position where the first detection target parts can be detected, away from the first detection target parts, and in a manner not interlocked with the crankshaft; and
a second non-contact sensor provided at a position where the second detection target parts can be detected, away from the second detection target parts, and in a manner not interlocked with the crankshaft;
wherein the elastic bodies and elastic body compression means are positioned in such a way that compression of the multiple elastic bodies by the elastic body compression means starts at multiple timings.

4. A pedal force sensor according to Claim 3, **characterized in that** the elastic body compression means comprises:
a pressing means that utilizes at least one of edges of the first opening in the drive wheel and a contact body that rotates together with the drive wheel and contacts the elastic body; and
a pressure-receiving means that utilizes the other of edges of the second opening in the sprocket.

5. A pedal force sensor according to Claim 2, **characterized in that** the multiple elastic bodies are supported in an expandable/contractible manner in the circumferential direction of the drive wheel by projections provided at at least one of the first openings in the drive wheel and second openings in the sprocket.

6. A pedal force sensor according to Claim 3, **characterized in that** the multiple elastic bodies are supported in an expandable/contractible manner in the circumferential direction of the drive wheel by projections provided at at least one of the first openings in the drive wheel and second openings in the sprocket.

7. A pedal force sensor according to Claim 4, **characterized in that** the multiple elastic bodies are supported in an expandable/contractible manner in the circumferential direction of the drive wheel by projections provided at at least one of the first openings in the drive wheel and second openings in the sprocket.

8. A pedal force sensor according to Claim 1, **characterized in that** the elastic bodies are coil springs.

9. A pedal force sensor according to Claim 3, **characterized in that** the elastic bodies are coil springs.

10. A pedal force sensor according to Claim 1, **characterized in that** a rotation-limiting means is provided that regulates the rotational displacement between the drive wheel and sprocket within a specified range.

11. A pedal force sensor according to Claim 3, **characterized in that** a rotation-limiting means is provided that regulates the rotational displacement between the drive wheel and sprocket within a specified range.

12. A pedal force sensor according to Claim 1, **characterized in that** the multiple elastic bodies include two or more types of elastic bodies in which at least one of length and modulus of elasticity is different.

13. A pedal force sensor according to Claim 3, **characterized in that** the multiple elastic bodies include two or more types of elastic bodies in which at least one of length and modulus of elasticity is different.

14. An electrically-assisted vehicle **characterized in that** a pedal force sensor according to Claim 1 is installed on it.

15. An electrically-assisted vehicle **characterized in that** a pedal force sensor according to Claim 3 is installed on it.
